Europäisches Patentamt

European Patent Office

Office européen des brevets

(19)

(11) Veröffentlichungsnummer: **0 123 769**
**B1**

(12) **EUROPÄISCHE PATENTSCHRIFT**

(45) Veröffentlichungstag der Patentschrift:
04.06.86

(51) Int. Cl.⁴: **B 23 C 3/06**

(21) Anmeldenummer: **83890066.0**

(22) Anmeldetag: **27.04.83**

(54) **Fräsmaschine.**

(43) Veröffentlichungstag der Anmeldung:
**07.11.84 Patentblatt 84/45**

(45) Bekanntmachung des Hinweises auf die Patenterteilung:
**04.06.86 Patentblatt 86/23**

(84) Benannte Vertragsstaaten:
**AT DE GB IT**

(56) Entgegenhaltungen:
**AT - B - 351 890**
**DE - A - 2 808 880**
**DE - B - 2 209 622**

(73) Patentinhaber: **GFM Gesellschaft für Fertigungstechnik und Maschinenbau Gesellschaft m.b.H., Ennserstrasse 14, A-4403 Steyr (AT)**

(72) Erfinder: **Blaimschein, Gottfried, Dipl.-Ing., Puchstrasse 2, A-4400 Steyr (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

ACTORUM AG

## Beschreibung

Die Erfindung betrifft eine Fräsmaschine mit einem Maschinenbett, wenigstens einem ringförmigen innenschneidenden Fräswerkzeug und zwei Spannstöcken, von denen zumindest einer eine axial verschiebbare Pinole trägt.

Bei den z.B aus der DE-B-2209622 bekannten Fräsmaschinen mit Innenfräsern müssen die Werkzeuge zum Werkstückwechsel in einer Relativbewegung zu den Spannstöcken über deren Futter gefahren werden, um zwischen den beiden Futtern der Spannstöcke Platz für ein vertikales Einsetzen bzw. Abnehmen des Werkstückes zu machen, wobei die bekannten verschiebbaren Pinolen nach dem Einsetzen der Werkstücke zur Zentrierung gegen das Werkstück gedrückt werden. Die Ausladung der Futter muss daher an die zu überbrückende Gesamtbreite des das Fräswerkzeug aufnehmenden Frässchlittens und der Durchmesser des Futters auf den Innenkreis des Fräswerkzeuges abgestimmt sein, was zu einer wenig stabilen Werkstückhalterung führt und Platzprobleme für die Futterausbildung mit sich bringt. Dazu kommt noch die Notwendigkeit, eine über den Frässchlitten hinwegreichende Ladeeinrichtung zum Wechseln der Werkstücke verwenden zu müssen, so dass trotz eines relativ grossen Aufwandes für die Lade- und Spanneinrichtung nur eine vibrationsanfällige Spannung des Werkstückes und ein relativ hohe Nebenzeiten verursachendes Werkstückwechseln erreichbar sind.

Der Erfindung liegt daher die Aufgabe zugrunde, diese Mängel zu beseitigen und eine Fräsmaschine der eingangs geschilderten Art zu schaffen, die auf einfache Weise ein rationelles, aufwandsarmes Werkstückwechseln erlaubt und die Möglichkeit einer stabilen Werkstückspannung bietet.

Die Erfindung löst diese Aufgabe dadurch, dass die Pinole des einen Spannstockes bis durch die sich in Werk stückwechselstellung befindenden Werkzeuge hindurch ausfahrbar ist und für eine Axialbewegung des Werkstückes zum Werkstückwechsel mit dem selbst im Masse der Pinolenverschiebung verfahrbaren anderen Spannstock und/oder einer zur Pinolenverschiebung synchron verschiebbaren Gegenpinole dieses anderen Spannstockes zusammenwirkt. Auf Grund des Zusammenspiels zwischen Pinole einerseits und Spannstock bzw. Gegenpinole andererseits lässt sich ein Werkstück relativ zu einem Spannstock axial so weit bewegen, dass es in das oder die vorhandenen Fräswerkzeuge eingefädelt bzw. aus diesen ausgefädelt werden kann und, ohne das Fräswerkzeug über ein Spannfutter fahren zu müssen, ein Werkstückwechsel seitlich neben dem Frässchlitten bequem möglich ist. Dabei sind unter Pinolen alle geeigneten axial verschiebbaren Werkstückaufnahmeeinrichtungen, wie Spitzen aber auch an Stempeln od. dgl. angeordnete Aufnahmehülsen, Klemmen u. dgl., zu verstehen. Zum Werkstückwechsel braucht diese Pinole lediglich ausgefahren zu werden, bis sie durch die Werkzeuge hindurchragt, wobei auch gleichzeitig der gegenüberliegende Spannstock oder die Gegenpinole entsprechend zurückführt, und der Platz für den Werkstückeinsatz bzw. Werkstückwechsel ist frei. Sitzt dann das neue Werkstück zwischen Pinole und Spannfutter bzw. zwischen Pinole und Gegenpinole, wird es durch Synchronverfahren von Pinole und Spannstock bzw. Gegenpinole in die Werkzeuge eingeführt und durch die Futter beider Spannstöcke oder das Futter des einen Spannstockes und der nun ausgefahrenen Gegenpinole gespannt. Die Futter der Spannstöcke sind nicht mehr an die Innendimensionen der Fräswerkzeuge gebunden und auch die Ausladung der Futter kann gering bleiben, so dass auf einfache Weise eine stabile, vibrationssteife Spannung des Werkstückes erreichbar ist. Da weiters der Werkstückwechsel seitlich neben den Frässchlitten verlagert wird und das Werkstück hier gut zugänglich ist, wird mit einer aufwandsarmen Ladeeinrichtung das Auslangen gefunden und die Nebenzeiten für den Werkstückwechsel können entsprechend reduziert werden.

Der erfindungsgemässe Werkstückwechsel lässt sich bei jeder gattungsgemässen Fräsmaschine anwenden, sei es bei Ein- oder Mehrschlittenmaschinen, bei einer Längspositionierung durch Verschieben der Werkzeuge oder durch Parallelbewegung der Spannstöcke usw. Eine besonders günstige Konstruktion ergibt sich dabei, wenn die mit Pinole und Gegenpinole bestückten Spannstöcke fest am Maschinenbett sitzen und gegebenenfalls für die ausgefahrene Gegenpinole eine Abstützung vorgesehen ist. Die mit geringem Aufwand in den Spannstöcken einzurichtenden Pinolen machen eine Verstellbarkeit der Spannstöcke selbst unnötig, was die Maschine weiter vereinfacht und auch das Positionieren des Werkstückes erleichtert. Da beim Spannen des Werkstückes die Gegenpinole ausgefahren ist, können je nach Ausfahrlänge zur Erhöhung der Stabilität für die Gegenpinole eine oder mehrere Abstützungen vorbereitet sein, welche Abstützungen als eigene Lünetten oder als am Spannstockkörper angreifende Tragarme od. dgl. ausgebildet sind und, sofern sie den Werkstückwechsel behindern, auf geeignete Weise entfernbar sein müssen.

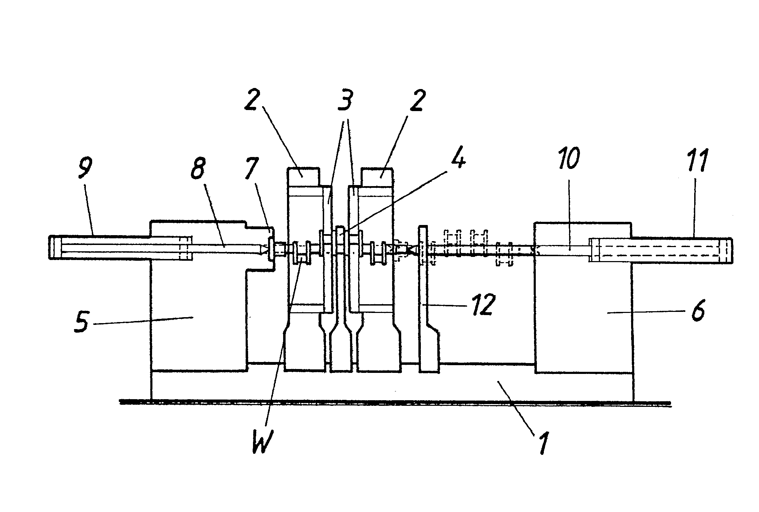

In der Zeichnung ist ein Ausführungsbeispiel der erfindungsgemässen Fräsmaschine schematisch in teilgeschnittener Seitenansicht dargestellt.

Ein Maschinenbett 1 trägt zwei Frässchlitten 2 mit je einem ringförmigen, innenschneidenden Fräswerkzeug 3, zwischen welchen Frässchlitten 2 eine Lünette 4 angeordnet ist. Zum Spannen des zu bearbeitenden Werkstückes w, beispielsweise eine Kurbelwelle, gibt es zwei fest am Maschinenbett 1 aufgesetzte Spannstöcke 5, 6, von denen der als Spindelstock dienende Spannstock 5 mit einem Spannfutter 7 und einer axial verschiebbaren Pinole 8 ausgerüstet ist. Ein Hydrauliktrieb 9 sorgt dabei für die gewünschte Pinolenverstellung. Der andere, als Reitstock dienende Spannstock 6 weist eine ebenfalls verschiebbare Gegenpinole 10 auf, die über einen ihr zugeordneten Hydrauliktrieb 11 synchron zur Pinole 8 bewegt werden kann.

Für die Bearbeitung wird das Werkstück w mit

dem Spannfutter 7 des Spannstockes 5 gespannt und sitzt zwischen den Spitzen der eingefahrenen Pinole 8 und der ausgefahrenen Gegenpinole 10, wobei zur Stabilisierung der ausgefahrenen Gegenpinole 10 eine zusätzliche Abstützung 12 vorgesehen ist. Für einen Werkstückwechsel werden dann nach Lösen des Spannfutters 7 Pinole 8 und Gegenpinole 10 über die Hydrauliktriebe 9, 11 synchron bewegt, wodurch sie das Werkstück w durch die sich in Werkstückwechselstellung befindenden Fräswerkzeuge axial herausschieben und es bei ausgefahrener Pinole 8 und eingefahrener Gegenpinole 10 seitlich neben den Frässchlitten 2 frei zugänglich halten (strichlierte Stellung). Hier kann das Werkstück nun ohne Schwierigkeiten einfach und schnell gewechselt werden, worauf das zwischen die ausgefahrene Pinole 8 und die eingefahrene Gegenpinole 10 eingelegte neue Werkstück durch ein synchrones Zurückverschieben von Pinole 8 und Gegenpinole 10 wieder durch die Fräswerkzeuge 3 und die Lünette 4 eingefädelt und für die Bearbeitung in der gewünschten Position zwischen der eingefahrenen Pinole 8 und der ausgefahrenen Gegenpinole 10 mit dem geschlossenen Futter 7 gespannt wird. Dieser axiale Ladevorgang der Maschine erlaubt es, die Spannstöcke 5, 6 ohne weit ausladende Futter auszubilden und auch die Futterdurchmesser über die Werkzeuginnendurchmesser hinaus zu vergrössern, wodurch sich eine vibrationsfeste Spannung des Werkstückes w erreichen lässt.

## Patentansprüche

1. Fräsmaschine mit einem Maschinenbett (1), wenigstens einem ringförmigen, innenschneidenden Fräswerkzeug (3) und zwei Spannstöcken (5, 6), von denen zumindest einer (5) eine axial verschiebbare Pinole (8) trägt, dadurch gekennzeichnet, dass die Pinole (8) des einen Spannstockes (5) bis durch die sich in Werkstückwechselstellung befindenden Werkzeuge (3) hindurch ausfahrbar ist und für eine Axialbewegung des Werkstückes (w) zum Werkstückwechsel mit dem selbst im Masse der Pinolenverschiebung verfahrbaren anderen Spannstock und/oder einer zur Pinole synchron verschiebbaren Gegenpinole (10) dieses anderen Spannstockes (6) zusammenwirkt.

2. Fräsmaschine nach Anspruch 1, dadurch gekennzeichnet, dass die mit Pinole (7) und Gegenpinole (10) bestückten Spannstöcke (5, 6) fest am Maschinenbett (1) sitzen und gegebenenfalls für die ausgefahrene Gegenpinole (10) eine Abstützung (12) vorgesehen ist.

## Claims

1. A milling machine comprising a machine bed (1), at least one internally cutting, annular milling cutter (3) and two chuck-carrying posts (5, 6), at least one (5) of which carries an axially displaceable quill (8), characterized in that the quill (8) of the one chuck-carrying post (5) is extensible through the cutters (3) when they are in a toolchanging position and that for an axial movement of the cutter (w) for a change of tools said quill cooperates with the other chuck-carrying post, which is movable to the extent of the displacement of the quill, and/or with a second quill (10), which is carried by said other chuck-carrying post (6) and is displaceable in synchronism with the firstmentioned quill.

2. A milling machine according to claim 1, characterized in that the chuck-carrying posts (5, 6) which are provided with the quill (7) and the second quill (10), respectively, are fixedly mounted on the machine bed (1) and a support (12) is optionally provided for the second quill (10) when it has been extended.

## Revendications

1. Fraiseuse avec un banc (1) de machine, au moins un outil (3) de fraisage annulaire à tranchant intérieur et deux blocs de serrage (5, 6) dont l'un au moins (5) porte une douille (8) de broche pouvant être déplacée dans le sens axial, caractérisée par le fait que la douille (8) de broche de l'un (5) des blocs de serrage peut être déplacée en position de sortie jusqu'à travers les outils (3) se trouvant en position de changement de pièce à usiner et coopère, pour un mouvement axial de la pièce à usiner (w) aux fins de changement de pièce à usiner, avec l'autre bloc de serrage pouvant lui-même être déplacé dans les proportions du déplacement de la douille de broche et/ou avec une contredouille (10) de broche dudit autre bloc de serrage (6) qui peut être déplacée en synchronisme avec la douille de broche.

2. Fraiseuse suivant la revendication 1, caractérisée par le fait que les blocs de serrage (5, 6) équipés d'une douille (7) de broche et d'une contredouille (10) de broche sont montés solidaires sur le banc (1) de la machine et qu'un point d'appui (12) est éventuellement prévu pour la contredouille (10) de broche en position de sortie.